# EUROPÄISCHE PATENTANMELDUNG

(11) **EP 2 219 423 A2**
(43) Veröffentlichungstag der Anmeldung: **18.08.2010**
(21) Anmeldenummer: 10000003.3
(22) Anmeldetag: 04.01.2010
(51) Int. Cl.: H05B 41/298

(54) **Vorschaltgerät für Gasentladungslampen**

(30) Priorität: 28.01.2009 DE 102009006483
(71) Anmelder: Vossloh-Schwabe Deutschland GmbH, 73660 Urbach (DE)
(72) Erfinder: Cernek, Markus, 71404 Korb (DE); Abele, Manfred, 73577 Ruppertshofen (DE); Braunschmid, Peter, 73430 Aalen (DE)
(74) Vertreter: Rüger, Barthelt & Abel Patentanwälte

(57) **Zusammenfassung**

Für ein elektronisches Vorschaltgerät (1) mit eine Steuerschaltung (12) und einem Wechselrichter (5) zum Betrieb von Niederdruck-Gasentladungslampen (2) ist eine Stromerfassungsschaltung (15, 15a, 15b, 15c) vorgesehen, die den erfassten Strom i mit einem variablen Proportionalitätsfaktor k in ein entsprechendes Signal S umsetzt rund an einem Signaleingang der Steuerschaltung (12) liefert. Die Steuerschaltung (12) passt dem Proportionalitätsfaktor k in Abhängigkeit von verschiedenen Betriebsarten, die sie einnimmt, jeweils so an, dass der Proportionalitätsfaktor den jeweils zweckmäßigen Wert k1 oder k2 annimmt. Dadurch ist es möglich, eine korrekte Stromüberwachung auch bei extremen Betriebsarten wie Zündbetrieb oder Dimmbetrieb durchzuführen.

## Beschreibung

Gasentladungslampen, insbesondere Niederdruckgasentladungslampen, wie beispielsweise Leuchtstofflampen, werden von Vorschaltgeräten (englisch: Ballast) mit Betriebsleistung versorgt. Vorschaltgeräte neuerer Bauart sind dabei meist als sogenannte elektronische Vorschaltgeräte ausgebildet. Sie enthalten u.a. einen Wechselrichter, zum Beispiel in Gestalt einer Wechselrichterhalbbrücke, der zum Betrieb der Lampe eine Wechselspannung mit einer Frequenz in der Größenordnung von mehreren 10 kHz bereitstellt. Die Wechselrichterhalbbrücke wird in vielen Fällen von einer Steuerschaltung angesteuert, die die Schaltfrequenz der Wechselrichterhalbbrücke vorgibt.

Ein solches Vorschaltgerät ist beispielsweise aus der DE 103 57 538 A1 bekannt. Die Druckschrift befasst sich im Weiteren mit der Erfassung bestimmter Fehlerfälle an der Lampe. Es kann zweckmäßig oder erforderlich sein, den durch die Lampe oder den Wechselrichter fließenden Strom zu erfassen. Zur Stromerfassung sind der Technik sogenannten Shunts gebräuchlich. Es handelt sich bei einem Shunt um einen niederohmigen Widerstand, der von dem zu erfassenden Strom durchflossen wird, wobei der Spannungsabfall an dem Shunt als das den Strom kennzeichnende Signal ausgewertet wird. Ein solcher Shunt zur Erfassung des Stroms an einer Wechselrichterbrücke ist beispielsweise der DE 199 16 878 A1 zu entnehmen.

Weil der Shunt ein ohmscher Widerstand ist erzeugt er eine Verlustleistung. Diese soll möglichst gering sein. Deshalb wird der Shunt möglichst so niederohmig wie möglich gemacht. Dies ermöglicht die Erfassung großer Ströme mit geringen Spannungsabfällen und letztlich auch geringen Verlustleistungen. Andererseits können aber Schwierigkeiten auftreten, wenn Betriebsphasen existieren, in denen der zu erfassende Strom wesentlich geringer ist. An dem sehr niederohmigen Shunt entsteht dann kein ausreichendes Spannungssignal.

Elektronische Vorschaltgeräte von Niederdruckgasentladungslampen sind häufig zum Vorwärmen von Elektroden der Gasentladungslampe eingerichtet. Zum Beispiel offenbart die DE 103 57 538 A1 dazu einen Lampenzweig mit Resonanzkreis, der, wenn er bei ungezündeter Lampe und geeigneter Wechselrichterfrequenz in Resonanz gerät, Heizwendeln der Gasentladungslampe mit einem Heizstrom versorgt. In der Aufwärmphase fließt somit ein erhöhter Strom, während in der Betriebsphase ein deutlich niedriger Strom fließt.

In der Heizphase soll außerdem eine hohe Zündspannung erzeugt werden. Wegen der Reihenresonanz des Lampenkreises fließt dabei ein sehr hoher Strom. An einem gegebenen Shunt entsteht deshalb eine hohe Signalspannung, die einen Signaleingang übersteuern kann.

Davon ausgehend, ist es Aufgabe der Erfindung bei einem Vorschaltgerät für Gasentladungslampen, insbesondere Niederdruckgasentladungslampen, eine Möglichkeit anzugeben, den in einem Zweig fließenden Strom in verschiedenen Betriebsphasen sicher zu erfassen. Diese Aufgabe wird mit dem Vorschaltgerät nach Anspruch 1 gelöst:

Das erfindungsgemäße Vorschaltgerät weist eine Stromerfassungsschaltung auf, die von einem Strom durchflossen ist und an einem Signalausgang ein zu diesem Strom proportionales Signal erzeugt. Die Größe des Signals wird im Verhältnis zu dem Strom durch einen Proportionalitätsfaktor festgelegt. Dieser Proportionalitätsfaktor ist bei der Stromerfassungsschaltung einstellbar, d.h. wenigstens zwischen zwei verschiedenen Werten umschaltbar. Eine zur Ansteuerung des Wechselrichters vorgesehene Steuerschaltung erfasst einerseits die von der Stromerfassungsschaltung abgegebenen Signale und steuert die Stromerfassungsschaltung andererseits um deren Proportionalitätsfaktor einzustellen.

Die Steuerschaltung stellt dabei den Proportionalitätsfaktor in Abhängigkeit von ihrer eigenen jeweils eingenommenen Betriebsart ein. Arbeitet das Vorschaltgerät beispielsweise im Zündbetrieb, lässt die Steuerschaltung den Wechselrichter mit einer dem Zündbetrieb entsprechenden Betriebsfrequenz arbeiten. Es stellt sich an dem Wechselrichter zum Beispiel ein relativ hoher Strom ein. Zur Erfassung desselben genügt ein niedriger Proportionalitätsfaktor, der an der Stromerfassungsschaltung entsprechend eingestellt wird.

Bei der Steuerschaltung handelt es sich insbesondere um eine integrierte Schaltung mit einem spannungs- oder stromgesteuerten Oszillator (VCO) und einem Steuereingang zur Festlegung der Vorheizzeit. Eine solche Steuerschaltung ist z.B. unter der Bezeichnung ICB2FL01G verfügbar. An den Steuereingang wird vorzugsweise ein ohmscher Widerstand gegen Masse angeschlossen. An dem Steuereingang liegt während der Vorheizzeit eine definierte Spannung von z.B. 2,5V und nach Ablauf der Vorheizzeit eine andere Spannung von z.B. 0V an. Dadurch kann der die Vorheizzeit bestimmende Widerstandswert des angeschlossenen Widerstandsbauelements während der Vorheizzeit bestimmt werden. Die an dem Steuereingang anstehende Spannung wird bei der Erfindung zum Umschalten des Proportionalitätsfaktors genutzt. Mit anderen Worten, der zum Programmieren der Vorheizzeit vorgesehene Eingang wird als Ausgang zum Umschalten des Proportionalitätsfaktors der Stromerfassungsschaltung genutzt.

Wechselt das Vorschaltgerät nach dem Zünden der Lampe beispielsweise in Dauerbetrieb, ist ein niedrigerer Lampenstrom vorhanden. Zur Erfassung desselben ist ein etwas höherer Proportionalitätsfaktor erforderlich. Weil die Spannung an dem Steuereingang der Steuerschaltung beim Übergang zum Dauerbetrieb wechselt, kann setzt die Spannung als Steuersignal an die Stromerfassungsschaltung gesendet werden und setzt den Proportionalitätsfaktor entsprechend herauf.

Bei einem elektronischen Vorschaltgerät mit Warmstart ist die Startphase beispielsweise in mehrere Phasen gegliedert. Beispielsweise können Softstart, Vorheizung, Zündung, Pre-Run und Run-Modus unterschieden werden. Bei jeder dieser Betriebsphasen können unterschiedlich große Ströme auftreten, die sich teilweise deutlich unterscheiden können. Zur Erfassung der Ströme weisen entsprechende integrierte Schaltungen oder sonstige Steuerschaltungen häufig einen Multifunktionseingang auf. Dieser kann zu gleichen oder unterschiedlichen Zeitpunkten mehrere Signale auswerten. Bei den Signalen kann es sich beispielsweise um stromproportionale Spannungssignale eines Shunts handeln.

Manchmal kann nicht sichergestellt werden, dass ein vorgesehener Shunt in seiner Dimensionierung für alle Betriebsgrößen und Betriebsmodi optimal funktioniert und für in der Steuerschaltung intern vorgegebene Detektionsschwellen zuverlässige Werte liefert. Hier hilft die Erfindung ab, indem sie durch die variable Stromerfassungsschaltung für jeden Betriebsmodus jeweils den Komparatorschwellen des Multifunktionseingangs angepasste optimale liefert.

Die Stromerfassungsschaltung kann im einfachsten Fall zwei oder mehrere Shunts enthalten, die einzeln oder in Kombination aktiviert oder deaktiviert werden können. Die Steuersignale für das Ein- oder Ausschalten einzelner Shunts können zum Beispiel direkt von der Steuerschaltung, einem in dieser enthaltenen Mikrorechner oder auch durch ein zu der Steuerschaltung gehörige Zeitglied oder Ähnliches generiert werden. Unterscheidet das Vorschaltgerät beispielsweise die Aufwärmphase und die Betriebsphase und wird die Aufwärmphase für eine gegebene Zeitspanne nach Start des Vorschaltgeräts eingenommen, kann die Shuntumschaltung durch ein auf die gleiche Zeit eingestelltes Zeitglied erfolgen.

Alternativ kann das Signal auch durch einen in der Verstärkung veränderbaren Verstärker oder Begrenzer geleitet werden, um so das Signal zu verschiedenen Erfordernisse anzupassen.

Weitere Einzelheiten vorteilhafter Ausführungsformen der Erfindung ergeben sich aus der Zeichnung der Beschreibung oder Unteransprüchen. Die Beschreibung beschränkt sich auf wesentliche Aspekte der Erfindung und sonstiger Gegebenheiten. Die Zeichnung offenbart weitere Details und ergänzt die Beschreibung. Es zeigen:
Figur 1 ein Blockschaltbild eines Vorschaltgeräts mit umschaltbarem Shunt.
Figur 2 eine abgewandelte Ausführungsform des Vorschaltgeräts nach Figur 1 als Blockschaltbild und
Figur 3 bis 5 Ausführungsformen des erfindungsgemäßen Vorschaltgeräts mit einer Stromerfassungsschaltung mit einstellbarem Verstärkungsfaktor.

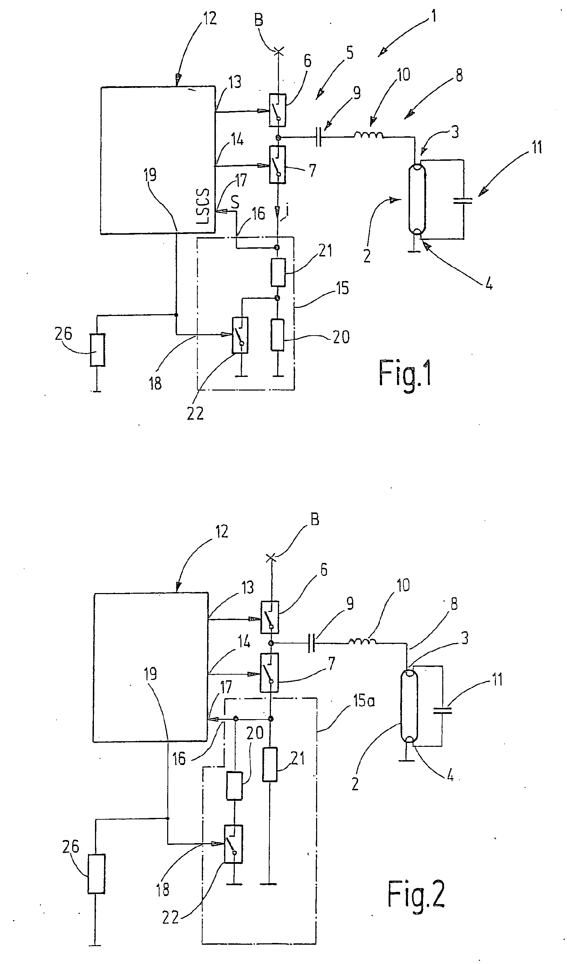

In Figur 1 ist ein Blockschaltbild eines elektronischen Vorschaltgeräts 1 veranschaulicht, dass zum Betrieb einer Niederdruck-Gasentladungslampe, beispielsweise in Gestalt eiern Leuchtstofflampe dient. Die Gasentladungslampe 2 kann mit vorheizbaren Elektroden 3, 4 versehen sein, um einen Warmstart zu ermöglichen.

Das Vorschaltgerät 1 enthält einen Wechselrichter 5, beispielsweise in Form einer Wechselrichterhalbbrücke mit zumindest zwei elektronisch steuerbaren Schaltern 6, 7. Die Schalter können Feldeffekttransistoren, zum Beispiel MOSFETs oder IGBTs oder dergleichen sein. Sie werden abwechselnd ein- und ausgeschaltet und speisen dadurch einen Lampenzweig 8, in dem die Gasentladungslampe 2 angeordnet ist. Der Lampenzweig 8 enthält außer einem Koppelkondensator 9 zur Potentialtrennung ein strombegrenzendes Bauelement. Zum Beispiel in Gestalt einer Drossel 10 sowie die Gasentladungslampe 2, die mit der Drossel 10 in Reihe geschaltet ist. An die Gasentladungslampe 2 kann außerdem ein Zündkondensator 11 angeschlossen sein, der die Elektroden 3, 4 miteinander verbindet.

Der Lampenzweig 8 ist vorzugsweise so dimensioniert, dass er zum Zünden der Gasentladungslampe 2 bei Zündfrequenz eine Eigenresonanz aufweist, der durch die Drossel 10 und den Zündkondensator 11 gebildet ist. Bei der niedrigeren Betriebsfrequenz ist er hingegen induktiv. Die Drossel 10 wirkt dann strombegrenzend.

Zum Ansteuern des Wechselrichters 5 dient eine Steuerschaltung 12, deren Ansteuerausgänge 13, 14 mit den Schaltern 6, 7 verbunden sind (z.B. ICB2FL01G von Infineon). Wegen der Innenschaltung, Funktionsbeschreibung und Standardapplikation wird auf das zu der ICB2FL01G gehörige Datenblatt verwiesen. Der obere Schalter 6 ist mit einem Anschluss der Betriebsspannung 15 verbunden. Sein unterer Anschluss ist mit dem oberen Anschluss des Schalters 7 und zugleich mit dem Lampenzweig 8 verbunden. Der untere Anschluss des Schalters 7 ist über eine Stromerfassungsschaltung 15 mit Masse verbunden.

Die Stromerfassungsschaltung 15 erzeugt an einem Signalausgang 16 ein Signal S, das den durch die Stromerfassungsschaltung 15 fließenden Strom i kennzeichnet. Das Signal S wird an einen Signaleingang 17 der Steuerschaltung 12 geliefert.

Die Stromerfassungsschaltung 15 erzeugt als Signal S vorzugsweise eine Größe, beispielsweise eine Spannung, die dem Strom i proportional ist, so dass das S = k * i gilt. "k" ist dabei der Proportionalitätsfaktor. Die Stromerfassungsschaltung 15 hat einen variablen Proportionalitätsfaktor k. Dieser ist zumindest zwischen zwei Werten k1 und k2 umschaltbar. Zum Umschalten des Proportionalitätsfaktors k weist die Stromerfassungsschaltung 15 einen Steuereingang 18 auf. Dieser ist an einen Programmiereingang 19 der Steuerschaltung 12 angeschlossen (bei oben genannter Schaltung von Infineon z.B. der Programmiereingang, der in Datenblättern mit "RFPH" bezeichnet ist). An diesen Programmiereingang 19 ist ein Widerstang gegen Masse angeschlossen. Während der Vorheizphase steht an dem Programmiereingang 19 eine Spannung an. Der sich aufgrund des Widerstandswerts des angeschlossenen Widerstands 26 ergebende Strom bestimmt die Länge der Vorheizzeit. Mit Ablauf der Vorheizzeit fällt die Spannung an dem Programmiereingang 19 weg. Diese Spannungsänderung wird zum Umschalten des Proportionalitätsfaktors genutzt.

Die Stromerfassungsschaltung 15 weist zumindest einen Shunt 20 und vorzugsweise einen weiteren Shunt 21 auf. Die beiden Shunts 20, 21 können, wie in Figur 1 dargestellt, in Reihe geschaltet sein. Wenigstens einen der beiden Shunts 20, 21 kann ein Schalter 22 zum Beispiel in Form einer Drain-Source-Strecke eines geeigneten Feldeffekttransistors parallel geschaltet sein. Sein Gate ist dann mit dem Steuereingang 18 verbunden. In ausgeschaltetem (hochohmigen) Zustand fließt der gesamte Strom i durch die Reihenschaltung der beiden Shunts 20, 21. Ist der Schalter 22 hingegen leitend, schließt er den Shunt 20 kurz. Es ist dann nur noch der Shunt 21 aktiv.

Das insoweit beschriebene Vorschaltgerät 1 arbeitet wie folgt:

Die Steuerschaltung 12 kann wenigstens zwei verschiedene Betriebsarten einnehmen, nämlich zum Beispiel Zündbetriebsart und Dauerbetrieb. Sie kann als zentralen Bestandteil einen integrierten Schaltkreis haben, wie beispielsweise den ICB2FL01G von Infineon. Für das Zünden der Lampe steuert die Steuerschaltung 12 den Wechselrichter 5 mit einer Frequenz an, die beispielsweise der Resonanzfrequenz entspricht, die von der Drossel 10 und dem Zündkondensator 11 festgelegt ist. Hierbei überwacht die Steuerschaltung 12 die Zündspannung anhand des Stroms i. Einerseits soll eine möglichst hohe Zündspannung erreicht werden, andererseits dürfen Sicherheitsgrenzen nicht überschritten werden. Um hohe Zündspannungen von zum Beispiel größer als 800 V_{f} zu erreichen und deren Höhe zu überwachen, muss der in der Stromerfassungsschaltung 15 wirksame Shunt einen sehr kleinen Wert aufweisen. Dies wird erreicht, indem der Shunt 20 durch den Schalter 22 kurzgeschlossen wird. Dazu erhält die Stromerfassungsschaltung 15 an ihrem Steuereingang 18 von dem Programmiereingang 19 ein entsprechendes Schaltsignal. Das dann allein von dem Shunt 21 erzeugte Spannungssignal S wird dann an den Signaleingang 17 (LSCS) geliefert. Das gelieferte Signal entspricht den Signalgrenzen laut Datenblatt.

Nach dem Zünden der Gasentladungslampe 2 geht das Vorschaltgerät 1 in den stationären Betrieb über. Dazu senkt die Steuerschaltung 12 die Schaltfrequenz des Wechselrichters 5 ab und die Spannung an dem Programmiereingang wechselt auf einen anderen Wert, z.B. Null Volt. Der Strom i erreicht relativ geringe Werte. Die Steuerschaltung 12 öffnet nun den Schalter 22 durch ein entsprechendes Steuersignal, das aus der Spannungsänderung an dem Programmiereingang 19 abgeleitet worden ist, wodurch nun die Reihenschaltung der Shunts 20, 21 wirksam wird. Der verringerte Strom i erzeugt nun wiederum ausreichende Signalpegel des Signals S, so dass im Bedarfsfall die inneren Schaltschwellen der Steuerschaltung 12 erricht werden. Dies gilt insbesondere für den Dimmbetrieb, wenn der Strom i sehr geringe Werte erreicht.

Durch das Ein- und Ausschalten des Schalters 22 wird der Proportionalitätsfaktor k zwischen zwei Werten k1 und k2 umgeschaltet. Ist der Schalter 22 geschlossen gilt S = k1 * i. Ist der Schalter 22 offen gilt S = k2 * i. Beispielsweise ist k1 der Widerstandswert des Shunts 21. K2 ist dann die Summe der Widerstandswerte der Shunts 20 und 21.

Das Umschalten der Stromerfassungsschaltung kann, wie beschrieben, beim Übergang von der Zündbetriebsart zur Dauerbetriebsart anhand eines Spannungswechsels an dem Programmiereingang 19 erfolgen. Alternativ kann das Umschalten auch beim Übergang von ungedimmten Betrieb zu gedimmten Betrieb erfolgen, um besonders kleine Lampenströme sicher erfassen zu können.

Die Umschaltung des Proportionalitätsfaktors k der Stromerfassungsschaltung 15 kann, wie Figur 2 zeigt, alternativ auch durch eine abgewandelte Stromerfassungsschaltung 15a erfolgen. Diese umfasst wiederum zwei Shunts 20, 21, die zueinander parallel geschaltet sind. Dem Shunt 20 ist zusätzlich der Schalter 22 in Reihe geschaltet. Ist der Schalter 22 geschlossen, hat der insgesamt wirksame Shunt den sich aus der Parallelschaltung der Shunts 21, 22 ergebenden Wert. Ist der Schalter 22 hingegen off, ist wiederum nur der Shunt 21 wirksam. Ansonsten gilt die obige Beschreibung entsprechend.

Alternativ kann dem Shunt 21 auch ein variabler, d. h. durch einen Schalter oder andere geeignete Mittel umschaltbarer Spannungsteile parallel geschaltet sein, über den die von dem Shunt erzeugte Signalspannung gezielt herabgesetzt werden kann.

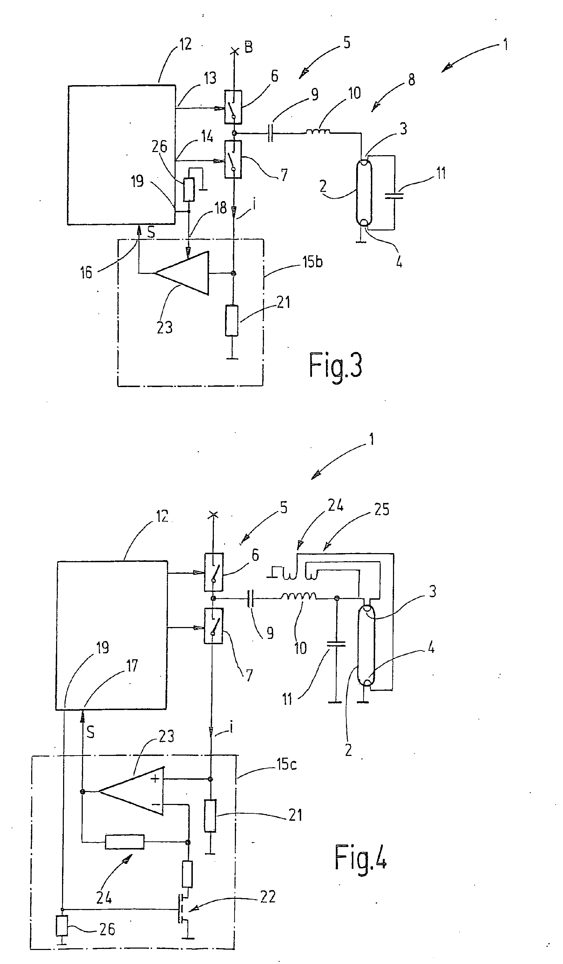

Eine weitere alternative Ausführungsform der Erfindung veranschaulicht Figur 3. Bei dieser ist lediglich ein einziger Shunt 21 vorhanden, der dauernd aktiv ist. Die Stromerfassungsschaltung 15 b enthält einen Signalverstärker 23, dessen Eingang die an dem Shunt 21 anstehende Spannung erfasst. Sein Ausgang ist mit dem Signalausgang 16 verbunden. Die Verstärkung des Signalverstärkers 23 ist einstellbar. Dazu ist.der Signalverstärker 23 mit dem Steuereingang 18 verbunden. Die Verstärkung des Signalverstärkers 23 kann vorzugsweise wenigstens zwei voneinander verschiedene Werte annehmen. Somit kann der Proportionalitätsfaktor k mit dem die Stromerfassungsschaltung 15 ein Signal S erzeugt, das den Strom i kennzeichnet, betriebsartenabhängig variiert, d.h. z.B. umgeschaltet werden. Ergänzend gilt die obige Beschreibung des Ausführungsbeispiels nach Figur 1 entsprechend. Es ist auch möglich, die Verstärkung, d.h. k in vielen kleinen Stufen oder stufenlos zu variieren.

Figur 4 veranschaulicht eine weitere Ausführungsform des erfindungsgemäßen Vorschaltgeräts 1. Wiederum weist es als Stromerfassungsschaltung 15 einen Signalverstärker 23 mit umschaltbarer Verstärkung auf. Zum Beispiel ist der Signalverstärker 23 dazu mit einem Gegenkopplungszweig 24 versehen, in dem der Schalter 22 angeordnet ist. Der Signalverstärker 23 kann durch einen Operationsverstärker gebildet sein, der mit seinem nichtinvertierenden Eingang an den Shunt 21 angeschlossen ist. Zu dem Betrieb der Stromerfassungsschaltung 15c der Steuerschaltung 12 und des Wechselrichters 5 gilt die obige Beschreibung der Ausführungsbeispiele nach Figur 1 bis 3 entsprechend. Ergänzend wird darauf hingewiesen, dass bei dem Ausführungsbeispiel nach Figur 4 die Vorheizung der Elektroden 3, 4 der Gasentladungslampe 2 auf abweichende Weise realisiert ist. Während der Zündkondensator 11 bei Figur 1 bis 3 "hinter" der Lampe 2 angeordnet ist, ist er bei der Ausführungsform nach Figur 4 "vor" der Gasentladungslampe 2 angeordnet. Die Vorheizung der Heizwendeln 3, 4 erfolgt beispielsweise über Koppelwicklungen 24, 25, die induktiv mit der Drossel 10 koppeln. Wie bereits bei den vorstehend beschriebenen Ausführungsbeispielen ist wiederum eine Umschaltung des Proportionalitätsfaktors k der Stromerfassungsschaltung 15c gegeben, wodurch in verschiedenen Betriebsarten, bei denen ganz unterschiedliche Ströme i durch die Gasentladungslampe 2 bzw. den Wechselrichter 5 fließen, jeweils an ein und demselben Signaleingang S der Steuerschaltung 12 die erforderlichen Signalpegel erreicht werden.

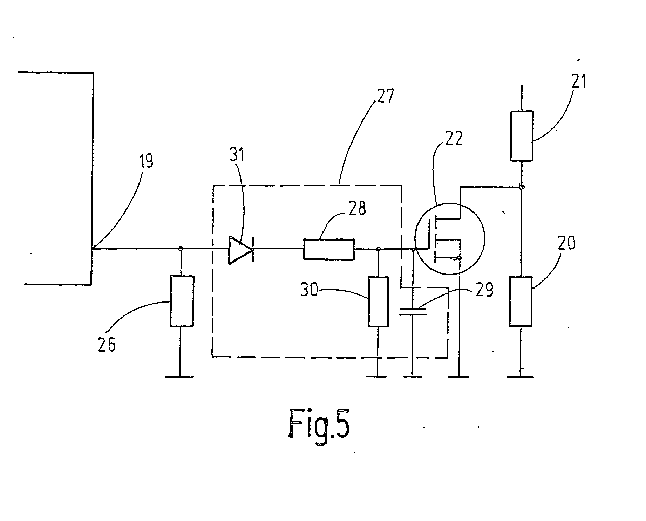

Figur 5 veranschaulicht eine weitere Variante der Schaltsignalgewinnung zum Umschalten der Shunts 20, 21 und somit des Proportionalitätsfaktord unter Ausnutzung des Spannungswechsels an dem Programmiereingang 19. Vordem als Transistor ausgeführtem Schalter 22 ist ein Integrationsglied 27 angeordnet. Zu diesem gehören ein Tiefpass, bestehend aus einem Widerstand 28 und einem gegen Masse geschalteten Kondensator 29. Dem Kondensator 29 ist ein Entladewiderstand 30 parallel geschaltet. Dem Widerstand 28 ist eine Diode 31 in Reihe geschaltet. Das Integrationsglied 27 hält evtl. an dem Programmiereingang 19 anstehende Schaltimpulse von dem Schalter 22 fern und bewirkt ein Umschalten des Proportionalitätsfaktors in gewünschter etwas verzögerter Weise.

Für ein elektronisches Vorschaltgerät 1 mit eine Steuerschaltung 12 und einem Wechselrichter 5 zum Betrieb von Niederdruck-Gasentladungslampen 2 ist eine Stromerfassungsschaltung 15, 15a, 15b, 15c vorgesehen, die den erfassten Strom i mit einem variablen Proportionalitätsfaktor k in ein entsprechendes Signal S umsetzt und an einen Signaleingang der Steuerschaltung 12 liefert. Die Steuerschaltung 12 passt den Proportionalitätsfaktor k in Anhängigkeit von verschiedenen Betriebsarten, die sie einnimmt, jeweils so an, dass der Proportionalitätsfaktor den jeweils zweckmäßigen Wert k1 oder k2 annimmt. Dadurch ist es möglich, eine korrekte Stromüberwachung auch bei extremen Betriebsarten wie Zündbetrieb oder Dimmbetrieb durchzuführen.

### Bezugszeichen

- 1: Vorschaltgerät
- 2: Gasentladungslampe
- 3,4: Elektroden
- 5: Wechselrichter
- 6,7: Schalter
- 8: Lampenzweig
- 9: Koppelkondensator
- 10: Drossel
- 11: Zündkondensator
- 12: Steuerschaltung
- 13,14: Ansteuerausgänge
- B: Betriebsspannung
- 15: Stromerfassungsschaltung 15a, 15b, 15c
- 16: Signalausgang
- 17: Signaleingang (LSCS)
- k: Proportionalitätsfaktor
- k1, k2: Werte des Proportionalitätsfaktors
- 18: Steuereingang
- 19: Steuerausgang
- 20, 21: Shunt
- 22: Schalter
- 23: Signalverstärker
- 24, 25: Koppelwicklungen
- 26: Widerstand
- 27: Integrationsglied

## Patentansprüche

1. Vorschaltgerät (1)
mit einem Wechselrichter (5), der zwei in Serie geschaltete Schalter (6, 7) aufweist, von denen einer mit der Betriebsspannung (B) verbunden und der andere mit über eine Stromerfassungsschaltung (15) mit Masse (┴) verbunden ist,
wobei die Stromerfassungsschaltung (15) von einem Strom (i) durchflossen ist und an einem Signalausgang (16) ein zu diesem Strom (i) mit einem Proportionalitätsfaktor (k) proportionales Signal (S) erzeugt und wobei die Stromerfassungsschaltung (15) einen Steuereingang (18) aufweist; über den der Proportionalitätsfaktor (k) einstellbar oder umschaltbar ist,
mit einer Steuerschaltung (12) zur Ansteuerung des Wechselrichters (5) in zumindest zwei voneinander verschiedenen Betriebsarten,
wobei die Steuerschaltung (12) mit dem Signalausgang (16) verbunden ist, um anhand des Signals (S) den Strom (i) zu erfassen, und
wobei die Steuerschaltung (12) mit dem Steuereingang (18) verbunden ist, um den Proportionalitätsfaktor (k) in Abhängigkeit von der Betriebsart festzulegen.

2. Vorschaltgerät nach Anspruch 1, **dadurch gekennzeichnet, dass** an den Wechselrichter (5) ein Lampenzweig (8) angeschlossen ist, der zumindest eine Gasentladungslampe (2) enthält.

3. Vorschaltgerät nach Anspruch 2, **dadurch gekennzeichnet, dass** der Lampenzweig (8) eine Resonanzkreisanordnung (10, 11) enthält.

4. Vorschaltgerät nach Anspruch 1, **dadurch gekennzeichnet, dass** die Stromerfassungsschaltung (15) mindestens einen Shunt (21) umfasst.

5. Vorschaltgerät nach Anspruch 1, **dadurch gekennzeichnet, dass** die Stromerfassungsschaltung (15) wenigstens zwei Shunts (20, 21) umfasst.

6. Vorschaltgerät nach Anspruch 1, **dadurch gekennzeichnet, dass** die Stromerfassungsschaltung (15) wenigstens einen Schalter (22) umfasst.

7. Vorschaltgerät nach Anspruch 6, **dadurch gekennzeichnet, dass** der Schalter (22) von dem Steuerausgang (19) der Steuerschaltung (12) gesteuert ist.

8. Vorschaltgerät nach Anspruch 1, **dadurch gekennzeichnet, dass** die Stromerfassungsschaltung (15) wenigstens zwei in Reihe geschaltete Shunts (20, 21) und einen Schalter (22) aufweist und dass der Schalter (22) zu einem der Shunts (20) parallel geschaltet ist.

9. Vorschaltgerät nach Anspruch 1, **dadurch gekennzeichnet, dass** die Stromerfassungsschaltung (15a) wenigstens zwei in parallel geschaltete Shunts (20, 21) und einen Schalter (22) aufweist und dass der Schalter (22) zu einem der Shunts (20) in Reihe geschaltet ist.

10. Vorschaltgerät nach Anspruch 1, **dadurch gekennzeichnet, dass** die Stromerfassungsschaltung (15b) einen Signalverstärker (23) umfasst.

11. Vorschaltgerät nach Anspruch 10, **dadurch gekennzeichnet, dass** der Signalverstärker (23) an zumindest einen Shunt (21) angeschlossen ist, der von dem Strom (i) durchflossen ist.

12. Vorschaltgerät nach Anspruch 11, **dadurch gekennzeichnet, dass** der Signalverstärker (23) eine variable Verstärkung aufweist.

13. Vorschaltgerät nach Anspruch 1, **dadurch gekennzeichnet, dass** der Signalverstärker (23) ein Spannungsverstärker ist.

14. Vorschaltgerät nach Anspruch 12, **dadurch gekennzeichnet, dass** der Signalverstärker einen Steuereingang (18) aufweist, der an den Steuerausgang (19) der Steuerschaltung (12) angeschlossen ist.
